# EUROPEAN PATENT SPECIFICATION

(11) **EP 4 318 976 B1**
(45) Date of publication and mention of the grant of the patent: **04.11.2026**
(21) Application number: 22794506.0
(22) Date of filing: 01.04.2022
(51) Int. Cl.: H04J 14/00, H01S 3/067, H01S 3/094, H01S 3/13, H01S 3/23, H01S 3/30, H04B 10/291, H01S 3/16

(54) **OPTICAL SIGNAL AMPLIFICATION APPARATUS AND METHOD**
VORRICHTUNG UND VERFAHREN ZUR VERSTÄRKUNG OPTISCHER SIGNALE
APPAREIL ET PROCÉDÉ D'AMPLIFICATION DE SIGNAL OPTIQUE

(30) Priority: 25.04.2021 CN 202110450172
(43) Date of publication of application: 07.02.2024
(73) Proprietor: Huawei Technologies Co., Ltd., Longgang Shenzhen, Guangdong 518129 (CN)
(72) Inventor: GUO, Qiang, Shenzhen, Guangdong 518129 (CN); ZHOU, Rui, Shenzhen, Guangdong 518129 (CN); JI, Xiaofan, Tianjin 300072 (CN); ZHANG, Lin, Tianjin 300072 (CN)
(74) Representative: Thun, Clemens
(86) International application number: PCT/CN2022/084789
(87) International publication number: WO 2022/228034

(56) References cited:
- EP-B1- 2 903 185
- WO-A1-2020/013096
- CN-A- 101 588 208
- CN-A- 112 383 357
- US-A1- 2010 266 284
- US-A1- 2015 085 352

## Description

### TECHNICAL FIELD

This application relates to the optical communications field, and more specifically, to an optical signal amplification apparatus and method.

### BACKGROUND

With the rapid growth of network traffic in recent years, a capacity of a conventional single-mode fiber communications system is gradually approaching its theoretical transmission limit. Improvement of conventional single-mode fiber communications transmission technologies cannot satisfy network traffic growth. This causes a capacity crisis of conventional single-mode fiber communications systems. Using a few-mode fiber (few-mode fiber, FMF) and a multi-core fiber (multi-core fiber, MCF) as transmission media of a space division multiplexing (space division multiplexing, SDM) system is expected to greatly increase a capacity of an optical fiber communications system, and is considered as an effective way to resolve the capacity crisis.

A few-mode/multi-core fiber amplifier is an important component in a long-distance SDM transmission system. A few-mode/multi-core fiber amplifier can implement simultaneous amplification for channels with different modes/fiber cores. With the expansion of a quantity of signal modes/fiber cores, a conventional few-mode/multi-core fiber amplifier cannot achieve good signal gain flatness. This greatly affects transmission performance of a system.

The document WO 2020/013096 A1 shows an optical amplification relay system.

The document US 2015/0085352 A1 shows an optical amplifier for space-division multiplexing.

The document EP 2 903 185 B1 shows an optical amplification node for a spatial division multiplexing optical network.

### SUMMARY

The present invention is defined by the independent claims. Further advantageous developments are shown by the dependent claims.

This application provides an optical signal amplification apparatus and method, to achieve comparatively good gain flatness, thereby helping improve transmission performance of a system, and greatly increasing a transmission distance.

According to a first aspect, an optical signal amplification apparatus is provided, and is applied to a space division multiplexing transmission system. A to-be-detected space division multiplexed signal in the space division multiplexing transmission system includes N spatial dimensions, and each spatial dimension includes G wavelength channels, where N is a positive integer, and G is a positive integer. The optical signal amplification apparatus includes a power detection module, a pump control module, and a Raman amplification module.

The power detection module is configured to: detect power of each of the G wavelength channels in each of the N spatial dimensions to obtain power detection information; determine power configuration information based on the power detection information; and send the power configuration information to the pump control module. The pump control module is configured to output N channels of pump light, where each channel of pump light includes M pieces of split pump light of different wavelengths, and a proportion of each piece of split pump light in pump light of a corresponding wavelength is determined based on the power configuration information. The Raman amplification module is configured to perform Raman amplification on the space division multiplexed signal in all of the N spatial dimensions by using the N channels of pump light.

The N channels of pump light correspond to the N spatial dimensions, to provide corresponding pump light for the space division multiplexed signal in each spatial dimension, to perform Raman amplification and power equalization on the space division multiplexed signal. The optical signal amplification apparatus in this embodiment of this application improves transmission performance of the space division multiplexing system, and greatly increases a transmission distance.

In a possible implementation, the pump control module includes M pump light sources of different wavelengths, M optical splitters, and N optical multiplexers. Each optical splitter has one input port and N output ports. Each pump light source is connected to an input port of one optical splitter. N output ports of each optical splitter are connected to one output port in the N optical multiplexers. The M pump light sources are configured to generate M pieces of pump light. Each optical splitter is configured to split pump light of a corresponding wavelength based on a first splitting coefficient, and output N pieces of split pump light through N output ports. The N pieces of split pump light output by each optical splitter arrive at the N optical multiplexers, respectively. The N optical multiplexers are configured to output the N channels of pump light. Each optical multiplexer is configured to perform, based on a second splitting coefficient, beam combining on M pieces of split pump light obtained from the M optical splitters, to obtain one channel of pump light. The first splitting coefficient and/or the second splitting coefficient are/is determined based on the power configuration information.

It can be understood that a splitting coefficient corresponding to power of the N channels of pump light output by the pump control module is determined based on the power configuration information. The splitting coefficient corresponding to the power of the N channels of pump light may be adjusted in the following two stages: a first stage in which the optical splitter splits pump light of each wavelength, and a second stage in which the optical multiplexer performs beam combining on a plurality of pieces of split pump light. The pump control module may obtain the N channels of pump light (or adjust the splitting coefficient in the foregoing two stages) by using different implementations. For ease of description, the first splitting coefficient (corresponding to the first stage) and the second splitting coefficient (corresponding to the second stage) are introduced for description.

In an implementation, the M optical splitters are tunable optical splitters, and a first splitting coefficient corresponding to each tunable optical splitter is determined based on the power configuration information. Herein, a function of the power configuration information is embodied in each tunable optical splitter, and only simple weighted summation needs to be performed on the M pieces of split pump light at the optical multiplexer. In this case, correspondingly, the second splitting coefficient is a weighting coefficient (or a weight value), and a value of each weighting coefficient is 1.

In another implementation, the M optical splitters are uniform optical splitters, a first splitting coefficient corresponding to each uniform optical splitter is determined by equally splitting pump light of a corresponding wavelength, and the second splitting coefficient is determined based on the power configuration information. Herein, the pump light of the corresponding wavelength merely needs to be equally split at the uniform optical splitter, and a function of the power configuration information is embodied in the optical multiplexer.

Optionally, the N optical multiplexers implement the second splitting coefficient by using a wavelength selective switch or an optical cross-connect device.

In still another implementation, both the first splitting coefficient and the second splitting coefficient are determined based on the power configuration information. In other words, a function of the power configuration information is embodied in both the optical splitter and the optical multiplexer.

Through the foregoing different implementations, the pump control module can dynamically adjust gains of different channels in different spatial dimensions, to compensate for a DMG generated after signal light passes through an EDFA, thereby implementing gain equalization of different channels in different spatial dimensions.

In a possible implementation, that the power detection module is configured to determine power configuration information based on the power detection information includes: the power detection module determines the power configuration information based on the power detection information according to a power flatness criterion.

Before performing detection on each wavelength channel, the power detection module may first separate each spatial dimension, and further separate each wavelength channel in each spatial dimension.

In a possible implementation, the power detection module includes a spatial channel separation module and a wavelength channel power detection module. The spatial channel separation module is configured to separate the space division multiplexed signal in the N spatial dimensions. The wavelength channel power detection module is configured to separate the G wavelength channels in each spatial dimension, and detect the power of each wavelength channel.

For example, the spatial channel separation module is a space division demultiplexer.

For example, the wavelength channel power detection module is a wavelength demultiplexer.

In a possible implementation, the optical signal amplification apparatus further includes a first optical splitter, the first optical splitter is configured to separate the to-be-detected space division multiplexed signal from a space division multiplexing fiber link, and the first optical splitter is connected to the power detection module.

In a possible implementation, the Raman amplification module includes a space division multiplexer and a space division multiplexing fiber. The N channels of pump light are coupled to the space division multiplexing fiber through the space division multiplexer, and the space division multiplexed signal transmitted in the space division multiplexing fiber undergoes stimulated Raman amplification under the action of the N channels of pump light.

In a possible implementation, the optical signal amplification apparatus is applied to a few-mode fiber transmission system (for example, a few-mode fiber C+L-band transmission system), and the optical signal amplification apparatus further includes N phase plates. The N phase plates are disposed between the pump control module and the Raman amplification module. The N phase plates are configured to load, to corresponding modes, the N channels of pump light output by the pump control module, where the N spatial dimensions are N modes. The optical signal amplification apparatus in this embodiment of this application is applied to the few-mode fiber transmission system, and can compensate for gains at different channels in different modes, thereby implementing mode channel equalization of the few-mode fiber transmission system.

In a possible implementation, the optical signal amplification apparatus is applied to a multi-core fiber transmission system, and the optical signal amplification apparatus further includes a multi-core fan-in module. The multi-core fan-in module is disposed between the pump control module and the Raman amplification module. The multi-core fan-in module is configured to inject, into corresponding fiber cores, the N channels of pump light output by the pump control module, where the N spatial dimensions are N fiber cores. The optical signal amplification apparatus in this embodiment of this application is applied to the multi-core fiber transmission system, and can compensate for gains at different channels with different fiber cores, thereby implementing multi-core equalization.

According to a second aspect, an optical signal amplification method is provided. The method is performed by an optical signal amplification apparatus. The optical signal amplification apparatus is applied to a space division multiplexing transmission system. A to-be-detected space division multiplexed signal in the space division multiplexing transmission system includes N spatial dimensions, and each spatial dimension includes G wavelength channels, where N is a positive integer, and G is a positive integer. The method includes: detecting power of each of the G wavelength channels in each of the N spatial dimensions to obtain power detection information, and determining power configuration information based on the power detection information; outputting N channels of pump light, where each channel of pump light includes M pieces of split pump light of different wavelengths, and a proportion of each piece of split pump light in pump light of a corresponding wavelength is determined based on the power configuration information; and performing Raman amplification on the space division multiplexed signal in all of the N spatial dimensions by using the N channels of pump light. The optical signal amplification method in this embodiment of this application improves transmission performance of the space division multiplexing system, and greatly increases a transmission distance.

In a possible implementation, the M pieces of split pump light in each channel of pump light are obtained through beam combining based on a second splitting coefficient, and each piece of split pump light is obtained by splitting pump light of a corresponding wavelength based on a first splitting coefficient. The first splitting coefficient and/or the second splitting coefficient are/is determined based on the power configuration information.

It can be understood that a splitting coefficient corresponding to power of the N channels of pump light is determined based on the power configuration information. The splitting coefficient corresponding to the power of the N channels of pump light may be adjusted in the following two stages: a first stage in which an optical splitter splits pump light of each wavelength, and a second stage in which an optical multiplexer performs beam combining on a plurality of pieces of split pump light. A pump control module may obtain the N channels of pump light (or adjust the splitting coefficient in the foregoing two stages) by using different implementations. For ease of description, the first splitting coefficient (corresponding to the first stage) and the second splitting coefficient (corresponding to the second stage) are introduced for description.

In a possible implementation, the determining power configuration information based on the power detection information includes: determining the power configuration information based on the power detection information according to a power flatness criterion.

In a possible implementation, the optical signal amplification apparatus is applied to a few-mode fiber transmission system (for example, a few-mode fiber C+L-band transmission system), and the method further includes: loading the N channels of pump light to corresponding modes, where the N spatial dimensions are N modes. The optical signal amplification apparatus in this embodiment of this application is applied to the few-mode fiber transmission system, and can compensate for gains at different channels in different modes, thereby implementing mode channel equalization of the few-mode fiber transmission system.

In a possible implementation, the optical signal amplification apparatus is applied to a multi-core fiber transmission system, and the method further includes: injecting the N channels of pump light into corresponding fiber cores, where the N spatial dimensions are N fiber cores. In other words, the optical signal amplification method in this embodiment of this application is applied to the multi-core fiber transmission system, and can compensate for gains at different channels with different fiber cores, thereby implementing multi-core equalization.

According to a third aspect, a computer-readable storage medium is provided, and is configured to store a computer program. The computer program includes instructions used to perform the method according to any one of the second aspect or the possible implementations of the second aspect.

### BRIEF DESCRIPTION OF DRAWINGS

FIG. 1 is a schematic diagram of a space division multiplexing transmission system to which embodiments of this application are applied;
FIG. 2 is a schematic block diagram of an optical signal amplification apparatus according to an embodiment of this application;
FIG. 3 is an example diagram of a power detection module according to an embodiment of this application;
FIG. 4 is an example diagram of a pump control module according to an embodiment of this application;
FIG. 5 is another example diagram of a pump control module according to an embodiment of this application;
FIG. 6 is an example diagram of a Raman amplification module according to an embodiment of this application;
FIG. 7 is a schematic diagram of a structure of a hybrid Raman/EDFA space division multiplexing fiber amplifier according to an embodiment of this application;
FIG. 8 is a schematic diagram of a structure of a hybrid Raman/EDFA-based C+L-band few-mode fiber amplifier;
FIG. 9 is a schematic diagram of a structure of an optical fiber amplifier based on a multi-core fiber transmission system; and
FIG. 10 is a schematic flowchart of an optical signal amplification method according to an embodiment of this application.

### DESCRIPTION OF EMBODIMENTS

The following describes technical solutions in this application with reference to accompanying drawings.

For ease of understanding embodiments of this application, first, terms used in this application are briefly described.

### 1. Space division multiplexing (spatial division multiplexing, SDM)

Space division multiplexing is a manner of implementing multiplexing through space division. For example, a plurality of optical fibers are combined into a bundle to implement space division multiplexing, or space division multiplexing is implemented in one optical fiber.

### 2. Few-mode fiber (few mode fiber, FMF)

A few-mode fiber is a single-core fiber. Compared with a common single-mode fiber, a few-mode fiber has a comparatively large mode field area, and allows parallel data stream transmission in several independent spatial modes, thereby increasing a system communication capacity.

### 3. Few-mode erbium-doped fiber amplifier (few mode erbium-doped fiber amplifier, FM-EDFA)

A few-mode erbium-doped fiber amplifier is an active optical device in which a few-mode fiber is doped with a trace of erbium ions and pump light is injected to cause population inversion of the erbium ions, so that stimulated emission occurs when few-mode signal light passes through the fiber, thereby amplifying the signal light.

### 4. Differential mode gain (differential mode gain, DMG)

A differential mode gain is a difference between gains obtained in an optical amplifier in all modes of a few-mode fiber.

### 5. Mode-dependent loss (mode-dependent loss, MDL)

A mode-dependent loss means that transmission in a few-mode fiber in different modes has different transmission losses.

A few-mode/multi-core fiber amplifier is an important component in a long-distance SDM transmission system. At present, gain flatness between channels of a few-mode/multi-core fiber amplifier is comparatively poor, which seriously affects transmission performance of a system. In addition, an FM-EDFA has an excessively complex structure, and therefore cannot be deployed in a network.

A few-mode fiber amplifier is used as an example. An excessively high DMG of a few-mode fiber amplifier may cause an increase in a mode-dependent loss MDL of a mode division multiplexing system at repeater amplification. In a long-distance transmission system, after transmission through a plurality of spans, a probability of system interruption greatly increases due to MDL accumulation. This greatly affects transmission performance.

Based on this, this application proposes an optical signal amplification apparatus and method, to help improve transmission performance, and greatly increase a transmission distance.

The technical solutions in embodiments of this application are applied to an optical communications system, for example, a space division multiplexing transmission system, a few-mode fiber transmission system, or a multi-core fiber transmission system.

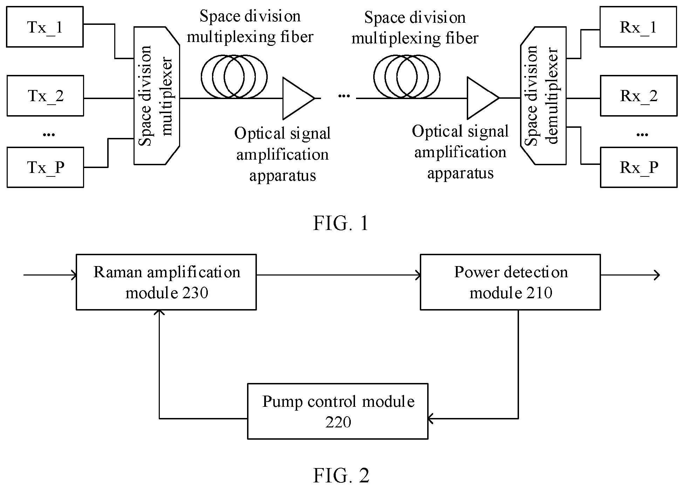

FIG. 1 is a schematic diagram of a space division multiplexing transmission system to which embodiments of this application are applied. As shown in FIG. 1, the system includes P wavelength division multiplexing transmitters (for example, the P wavelength division multiplexing transmitters are represented as Tx_1, Tx_2, ..., and Tx_P), a space division multiplexer, a space division multiplexing fiber, a plurality of optical signal amplification apparatuses, a space division demultiplexer, and P wavelength division multiplexing receivers (for example, the P wavelength division multiplexing receivers are represented as Rx_1, Rx_2, ..., and Rx_P). The plurality of wavelength division multiplexing transmitters are connected to the space division multiplexer. The plurality of wavelength division multiplexing receivers are connected to the space division demultiplexer. The space division multiplexer is connected to the space division multiplexing fiber. The optical signal amplification apparatus is cascaded with the space division multiplexing fiber.

Wavelength division multiplexed optical signals generated by the plurality of wavelength division multiplexing transmitters are converted into different spatial dimensions through the space division multiplexer. Optical signals multiplexed by the space division multiplexer enter the space division multiplexing fiber for transmission. The signals transmitted through the space division multiplexing fiber enter the optical signal amplification apparatus. The optical signal amplification apparatus amplifies the signals transmitted from the space division multiplexing transmission fiber, and inputs amplified optical signals to a next segment of fiber for transmission, and then the amplified optical signals are amplified again. At a receive end, the space division demultiplexer separates space division multiplexed optical signals received from the optical signal amplification apparatus, and respectively inputs the separated optical signals to the plurality of wavelength division multiplexing receivers. The wavelength division multiplexing receivers demodulate the received optical signals.

The optical signal amplification apparatus in FIG. 1 is the optical signal amplification apparatus proposed in this application, and can compensate for power unflatness of wavelength channels in different spatial dimensions, thereby helping improve transmission performance, and implementing long-distance transmission.

The following describes the optical signal amplification apparatus in embodiments of this application with reference to FIG. 2 to FIG. 9.

FIG. 2 is a schematic block diagram of an optical signal amplification apparatus according to an embodiment of this application. As shown in FIG. 2, the optical signal amplification apparatus includes a power detection module 210, a pump control module 220, and a Raman amplification module 230. The optical signal amplification apparatus is applied to a space division multiplexing transmission system. A to-be-transmitted space division multiplexed signal in the space division multiplexing transmission system includes N spatial dimensions, and each spatial dimension includes G wavelength channels, where N is a positive integer, and G is a positive integer. For example, the spatial dimension may include a mode or a fiber core.

The power detection module 210 is configured to: detect power of each of the G wavelength channels in each of the N spatial dimensions to obtain power detection information; determine power configuration information based on the power detection information; and send the power configuration information to the pump control module.

The pump control module 220 is configured to output N channels of pump light, where each channel of pump light includes M pieces of split pump light of different wavelengths, a proportion of each piece of split pump light in pump light of a corresponding wavelength is determined based on the power configuration information, and M is an integer greater than 1.

The Raman amplification module 230 is configured to perform Raman amplification on the space division multiplexed signal in all of the N spatial dimensions by using the N channels of pump light.

In this embodiment of this application, the power detection module 210 detects the power of each wavelength channel in each spatial dimension, to obtain the power detection information (or power distribution information) of each wavelength channel in each spatial dimension, then performs calculation by using the power detection information, to obtain the power configuration information, and feeds back the power configuration information to the pump control module 220. The pump control module 220 is configured to output the N channels of pump light, where each channel of pump light includes M pieces of split pump light of different wavelengths, and a proportion of each piece of split pump light in pump light of a corresponding wavelength is determined based on the power configuration information. In other words, the pump control module 220 adjusts a splitting proportion of pump light of each wavelength based on the power configuration information, so that a pump configuration corresponding to each channel of output pump light is consistent with the power configuration information fed back by the power detection module. The Raman amplification module 230 is configured to perform Raman amplification on the space division multiplexed signal by using the N channels of pump light output by the pump control module. Specifically, the N channels of pump light correspond to the N spatial dimensions, to provide corresponding pump light for the space division multiplexed signal in each spatial dimension, to perform Raman amplification and power equalization on the space division multiplexed signal. The optical signal amplification apparatus in this embodiment of this application improves transmission performance of the space division multiplexing system, and greatly increases a transmission distance.

It should be understood that an arrow direction in FIG. 2 is merely an example for description, and does not constitute a limitation on this embodiment of this application.

Optionally, that the power detection module 210 is configured to determine power configuration information based on the power detection information includes: the power detection module determines the power configuration information based on the power detection information according to a power flatness criterion. The power flatness criterion may be understood as a criterion for ensuring power equalization of all wavelength channels in each spatial dimension.

The power detection module 210 detects the power of each wavelength channel in each spatial dimension in real time, determines the power configuration information according to the power flatness criterion, and feeds back the power configuration information to the pump control module 220, so that the pump control module 220 dynamically adjusts a splitting coefficient of each channel of pump light.

The power configuration information is used to implement power equalization between spatial wavelength channels. For example, the power configuration information may include one or more target power values. The target power value may be understood as a power compensation value for a wavelength channel in a spatial dimension.

A process in which the power detection module determines the power configuration information is described by using an example. It is assumed that the space division multiplexed signal transmitted in the space division multiplexing system has a plurality of spatial dimensions, and one of the spatial dimensions includes five wavelength channels. The power detection module may obtain a power value of each wavelength channel by performing detection on the five wavelength channels. To implement power equalization or power flattening, a power value of a wavelength channel whose power value is comparatively small in the five wavelength channels may be adjusted up, and a power value of a wavelength channel whose power value is comparatively large may be adjusted down, that is, a power value in the five wavelength channels is adjusted to the target power value. It can be understood that the example herein is merely for ease of understanding, and this application is not limited thereto. For example, a quantity of wavelength channels is not limited. It can be further understood that the example is given herein for a plurality of wavelength channels in only one spatial dimension, but during actual application, this may be extended to wavelength channels in a plurality of spatial dimensions. This is not specifically limited.

Before performing detection on each wavelength channel, the power detection module 210 may first separate each spatial dimension, and further separate each wavelength channel in each spatial dimension. Specifically, separation of the space division multiplexed signal in the N spatial dimensions may be implemented by using a spatial channel separation module (for example, a space division demultiplexer). Further, the G wavelength channels may be separated by using a wavelength channel power detection module (for example, a wavelength demultiplexer).

Optionally, the power detection module 210 may include the spatial channel separation module and the wavelength channel power detection module. The spatial channel separation module is configured to separate the space division multiplexed signal in the N spatial dimensions. The wavelength channel power detection module is configured to separate the G wavelength channels in each spatial dimension, and detect the power of each wavelength channel.

For example, the spatial channel separation module may be implemented by a space division demultiplexer. It can be understood that this application is not limited thereto, and spatial channel separation may be alternatively implemented by using another device or module having a spatial channel separation function.

For example, the wavelength channel power detection module may be implemented by a wavelength demultiplexer. It can be understood that this application is not limited thereto, and wavelength channel separation and/or detection may be alternatively implemented by using another device or module having a wavelength channel separation function and/or detection function.

Optionally, the power detection module 210 may further include a data collection and processing module. The data collection and processing module is configured to collect and process data output by the wavelength channel power detection module.

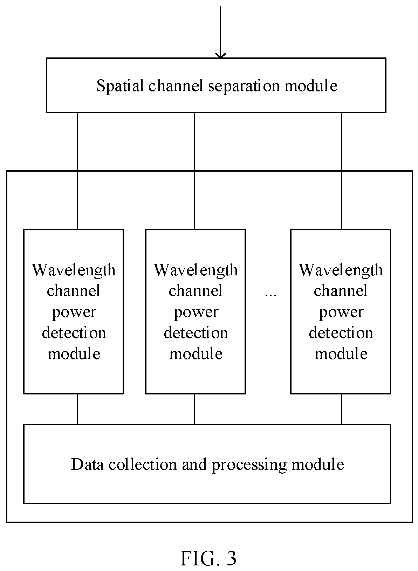

FIG. 3 is an example diagram of a power detection module. As shown in FIG. 3, the power detection module includes a spatial channel separation module, a plurality of wavelength channel power detection modules, and a data collection and processing module. The spatial channel separation module demultiplexes light in different spatial dimensions, to separate data in the spatial dimensions. The wavelength channel power detection module is configured to detect a power value of each wavelength channel in each spatial dimension. After an output of the plurality of wavelength channel power detection modules is processed by the data collection and processing module, power configuration information is output. The power detection module feeds back the power configuration information to a pump control module, to adjust splitting coefficients that are allocated by M pump light sources to the N spatial dimensions. For example, the splitting coefficients are represented as (*a₁, a₂, ..., a_{M}, ..., k₁, k₂, ..., k_{M}*).

A source of the to-be-detected space division multiplexed signal is not specifically limited in this application. The space division multiplexed signal detected by the power detection module 210 (that is, the to-be-detected space division multiplexed signal) may be partial signal light separated from a fiber link by using an optical splitting apparatus (for example, an optical splitter).

Optionally, the optical signal amplification apparatus further includes a first optical splitter. The first optical splitter is configured to separate the to-be-detected space division multiplexed signal from a space division multiplexing fiber link. The first optical splitter is connected to the power detection module. The power detection module performs detection on the partial signal light separated by the first optical splitter, to obtain a power status of each wavelength channel in each spatial dimension.

In this embodiment of this application, the pump control module 220 is configured to adjust a pump light splitting coefficient by using the power configuration information obtained from the power detection module 210, to output the N channels of pump light. The following briefly describes the pump control module 220.

Optionally, the pump control module 220 includes M pump light sources of different wavelengths, M optical splitters, and N optical multiplexers. Each optical splitter has one input port and N output ports. Each pump light source is connected to an input port of one optical splitter. N output ports of each optical splitter are connected to one output port in the N optical multiplexers. The M pump light sources are configured to generate M pieces of pump light. Each optical splitter is configured to split pump light of a corresponding wavelength based on a first splitting coefficient, and output N pieces of split pump light through N output ports. The N pieces of split pump light output by each optical splitter arrive at the N optical multiplexers, respectively. The N optical multiplexers are configured to output the N channels of pump light. Each optical multiplexer is configured to perform, based on a second splitting coefficient, beam combining on M pieces of split pump light obtained from the M optical splitters, to obtain one channel of pump light. The first splitting coefficient and/or the second splitting coefficient are/is determined based on the power configuration information.

The pump light source is configured to generate pump light. For example, the pump light source may be implemented by a pump laser.

It can be understood that the pump laser is merely one possible implementation thereof, and this application is not limited thereto. A person skilled in the art may replace the pump laser with another apparatus that can generate pump light. For example, a 980 nm laser diode may be used as the pump light source.

The M pump light sources of the different wavelengths are configured to generate the M pieces of pump light of the different wavelengths. It is assumed that the wavelengths corresponding to the M pieces of pump light are represented as *λ₁, λ₂,* ..., *and λ_{M},* and output powers corresponding to the pump light of the wavelengths are represented as *P_{λ1}, P_{λ2},* ..., *and P_{λM}.* In this case, a power of pump light output by each optical multiplexer is a weighted sum of powers of M pieces of split pump light. For example, a pump power of an optical multiplexer 1 is *a₁P_{λ1}+a₂P_{λ2}+...a_{M}P_{λM},* where *aᵢP_{λi}* is a pump power corresponding to a wavelength *λᵢ* after optical splitting, ..., and a pump power of an optical multiplexer N is *k₁P_{λ1}+k₂P_{λ2}+...k_{M}P_{λM}.* In other words, powers of the N channels of pump light output by the N optical multiplexers may be represented as (*a₁P_{λ1}+a₂P_{λ2}+...a_{M}P_{λM},* ..., *k₁P_{λ1}+k₂P_{λ2}+...k_{M}P_{λM}*). Splitting coefficients corresponding to the powers of the N channels of pump light may be represented as (*a₁, a₂, ..., a_{M}, ..., k₁, k₂, ..., k_{M}*).

In this embodiment of this application, the splitting coefficient corresponding to the power of the N channels of pump light output by the pump control module 220 is determined based on the power configuration information. The splitting coefficient corresponding to the power of the N channels of pump light may be adjusted in the following two stages: a first stage in which the optical splitter splits pump light of each wavelength, and a second stage in which the optical multiplexer performs beam combining on a plurality of pieces of split pump light. The pump control module may obtain the N channels of pump light (or adjust the splitting coefficient in the foregoing two stages) by using different implementations. For ease of description, the first splitting coefficient (corresponding to the first stage) and the second splitting coefficient (corresponding to the second stage) are introduced for description.

### Implementation 1:

The first splitting coefficient is determined based on the power configuration information. The pump control module 220 allocates a pump light power of a corresponding wavelength to N output ports of a tunable optical splitter based on the first splitting coefficient by using the tunable optical splitter. In other words, the pump control module determines the first splitting coefficient based on the power configuration information, and adjusts the tunable optical splitter based on the first splitting coefficient.

In the implementation 1, a function of the power configuration information is embodied in each tunable optical splitter, and only simple weighted summation needs to be performed on the M pieces of split pump light at the optical multiplexer. In this case, correspondingly, the second splitting coefficient is a weighting coefficient (or a weight value), and a value of each weighting coefficient is 1.

Specifically, the pump control module 220 includes the M pump light sources of the different wavelengths (*λ₁, λ₂, ..., λ_{M}*), the M tunable optical splitters, and the N optical multiplexers. Each optical splitter has one input port and N optical-splitting output ports. The input port is connected to one pump light source of a specific wavelength. A splitting proportion of the N output ports (that is, the first splitting coefficient) may be adjusted based on the power configuration information. The N pieces of split pump light output by each optical splitter arrive at the N optical multiplexers, respectively. Each optical multiplexer obtains split pump light output by all of the M optical splitters, that is, M pieces of split pump light. Each optical multiplexer is configured to perform, based on the second splitting coefficient, beam combining on the M pieces of split pump light obtained from the M optical splitters, to obtain one channel of pump light. In other words, an output of each optical multiplexer is a weighted sum of powers of the M pieces of split pump light (where the weighting coefficient is 1).

The first splitting coefficient generally refers to a splitting coefficient (or splitting proportion) adjusted by using the optical splitter. In addition, values of first splitting coefficients respectively corresponding to different optical splitters may be the same or may be different. This is not specifically limited in this application. A first splitting coefficient corresponding to one optical splitter may include one or more values. This is not limited.

For example, a pump power of an optical multiplexer 1 is *a₁P_{λ1}+a₂P_{λ2}+...a_{M}P_{λM},* where *aᵢP_{λi}* is a pump power corresponding to a wavelength *λᵢ* after optical splitting, ..., and a pump power of an optical multiplexer N is *k₁P_{λ1}+k₂P_{λ2}+...k_{M}P_{λM}.* Correspondingly, a first splitting coefficient corresponding to an optical splitter 1 is (*a₁, ..., k₁*), and a first splitting coefficient corresponding to an optical splitter M is (*a_{M}, ..., k_{M}*).

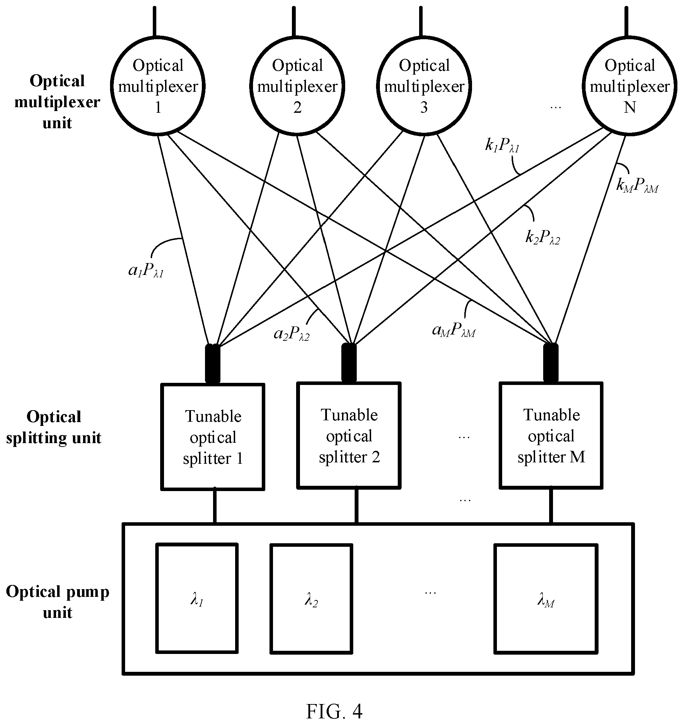

For ease of understanding, the pump control module corresponding to the implementation 1 is described herein with reference to FIG. 4. For ease of description, an optical pump unit, an optical splitting unit, and an optical multiplexer unit are introduced herein. As shown in FIG. 4, the pump control module includes three parts: the optical pump unit, the optical splitting unit, and the optical multiplexer unit. The optical pump unit includes M pump lasers of different wavelengths (*λ₁, λ₂, ..., λ_{M}*). The optical splitting unit includes M tunable optical splitters. Each optical splitter has one input port and N optical-splitting output ports. The input port is connected to one pump laser of a specific wavelength. A splitting proportion of the N output ports may be adjusted at will. The optical multiplexer unit includes N optical multiplexers. Each optical multiplexer performs beam combining on powers of pump light of the M wavelengths obtained through optical splitting, that is, an output of each optical multiplexer is a weighted sum of the powers of the pump light of the M wavelengths. For example, a pump light power output by an optical multiplexer 1 is *a₁P_{λ1}+a₂P_{λ2}+...a_{M}P_{λM},* ..., and a pump light power output by an optical multiplexer N is *k₁P_{λ1}+k₂P_{λ2}+... k_{M}P_{λM}.*

### Implementation 2:

The second splitting coefficient is determined based on the power configuration information. The pump control module adjusts a proportion of split pump light of each wavelength at the optical multiplexer by using the second splitting coefficient, and finally outputs the N channels of pump light. In other words, the pump control module determines the second splitting coefficient based on the power configuration information, and performs beam combining on split pump light of different wavelengths based on the second splitting coefficient.

In the implementation 2, the pump light of the corresponding wavelength merely needs to be equally split at the uniform optical splitter, and a function of the power configuration information is embodied in the optical multiplexer.

Specifically, the pump control module includes the M pump light sources of the different wavelengths (*λ₁, λ₂, ..., λ_{M}*), the M uniform optical splitters, and the N optical multiplexers. Each optical splitter has one input port and N optical-splitting output ports. The input port is connected to one pump light source of a specific wavelength. Each optical splitter splits a power of pump light of a corresponding wavelength into N equal parts, to obtain N pieces of split pump light whose powers are the same. The N pieces of split pump light output by each optical splitter arrive at the N optical multiplexers, respectively. Each optical multiplexer obtains split pump light output by all of the M uniform optical splitters, that is, M pieces of split pump light. Each optical multiplexer is configured to perform, based on the second splitting coefficient, beam combining on the M pieces of split pump light obtained from the M optical splitters, to obtain one channel of pump light. In other words, an output of each optical multiplexer is a weighted sum of powers of the M pieces of split pump light (where a weighting coefficient used for weighting is the second splitting coefficient, and is determined based on the power configuration information).

A difference from the implementation 1 lies in that, in the implementation 2, a first splitting coefficient corresponding to each uniform optical splitter is determined by equally splitting pump light of a corresponding wavelength, and the second splitting coefficient is determined based on the power configuration information.

For example, a pump power of an optical multiplexer 1 is *a₁P_{λ1}+a₂P_{λ2}+...a_{M}P_{λM},* where *aᵢP_{λi}* is a pump power corresponding to a wavelength *λᵢ* after optical splitting, ..., and a pump power of an optical multiplexer N is *k₁P_{λ1}+k₂P_{λ2}+...k_{M}P_{λM}.* Correspondingly, a second splitting coefficient corresponding to the optical multiplexer 1 is (*a₁, a₂, ..., a_{M}*), ..., and a second splitting coefficient corresponding to the optical multiplexer N is (*k₁, k₂, ..., k_{M}*).

In the implementation 2, optionally, the N optical multiplexers implement the second splitting coefficient by using a wavelength selective switch or an optical cross-connect device.

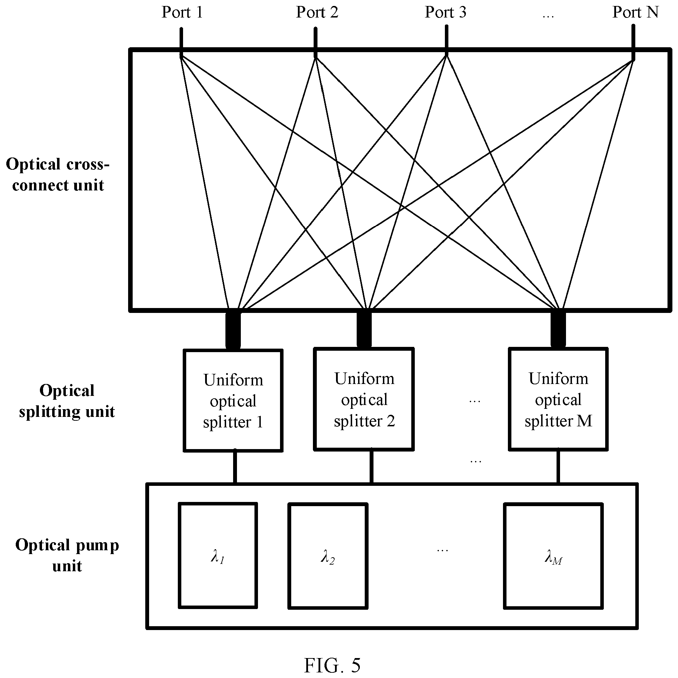

For ease of understanding, the pump control module corresponding to the implementation 2 is described herein with reference to FIG. 5. For ease of description, an optical pump unit, an optical splitting unit, and an optical cross-connect unit are introduced herein. As shown in FIG. 5, the pump control module includes three parts: the optical pump unit, the optical splitting unit, and the optical cross-connect unit. The optical pump unit includes M pump lasers of the different wavelengths (*λ₁, λ₂, ..., λ_{M}*). The optical splitting unit includes M uniform optical splitters, where each optical splitter splits a power of one piece of pump light of a specific wavelength into n equal parts (P_{λ1}/n, P_{λ2}/n, ..., P_{λM}/n). In other words, the first splitting coefficient is 1/n. The optical cross-connect unit has N output ports. The optical cross-connect unit cross-connects split optical signals by using the wavelength selective switch or the optical cross-connect device, flexibly adjusts a proportion of each wavelength component, performs optical multiplexing, and finally outputs the weighted N channels of light as pump light in different modes. Pump light of an output port 1 of the optical cross-connect unit is *a₁P_{λ1}+a₂P_{λ2}+...a_{M}P_{λM},* ..., and pump light of an output port N of the optical cross-connect unit is *k₁P_{λ1}+k₂P_{λ2}+...k_{M}P_{λM},* where *a₁, a₂, ..., a_{M}, ..., k₁, k₂,* ..., *and k_{M}* are different splitting coefficients. In other words, the optical cross-connect unit may be considered as N optical multiplexers, where each optical multiplexer corresponds to one output port of the optical cross-connect unit.

### Implementation 3:

The implementation 3 is an implementation combining the foregoing two implementations. Both the first splitting coefficient and the second splitting coefficient are determined based on the power configuration information. In other words, in the implementation 3, a function of the power configuration information is embodied in both the optical splitter and the optical multiplexer.

The pump control module allocates, by using a tunable optical splitter, a pump light power of a corresponding wavelength to N output ports of the tunable optical splitter based on the first splitting coefficient (where the first splitting coefficient is not obtained through equal splitting), and performs beam combining at the optical multiplexer based on the second splitting coefficient (where a value of the second splitting coefficient is not 1), to finally output the N channels of pump light. Certainly, the N channels of pump light herein may also be represented *as a₁P_{λ1}+a₂P_{λ2}+...a_{M}P_{λM}, ...,* and *k₁P_{λ1}+k₂P_{λ2}+...k_{M}P_{λM}.*

Through the foregoing three implementations, the pump control module can dynamically adjust gains of different channels in different spatial dimensions, to compensate for a DMG generated after signal light passes through an EDFA, thereby implementing gain equalization of different channels in different spatial dimensions.

The Raman amplification module 230 is configured to perform, by using the N channels of pump light obtained from the pump control module 220, Raman amplification on signal light transmitted in an optical fiber. The following describes the Raman amplification module 230.

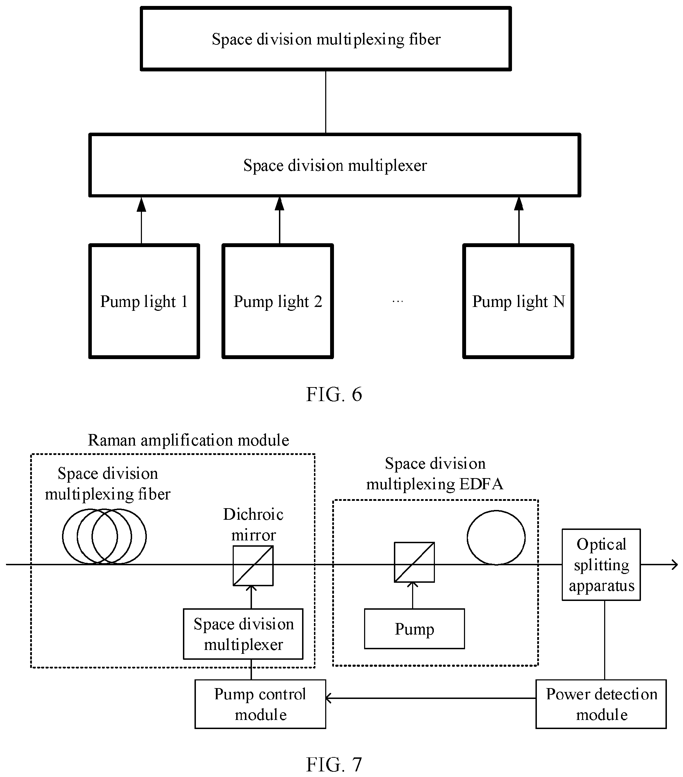

Optionally, the Raman amplification module 230 includes a space division multiplexer and a space division multiplexing fiber. The N channels of pump light are coupled to the space division multiplexing fiber through the space division multiplexer, and the space division multiplexed signal transmitted in the space division multiplexing fiber undergoes stimulated Raman amplification under the action of the N channels of pump light. FIG. 6 is an example diagram of a Raman amplification module according to an embodiment of this application. As shown in FIG. 6, the N channels of pump light output by the pump control module are coupled into the space division multiplexing fiber through the space division multiplexer, and the space division multiplexed signal transmitted in the optical fiber is subjected to the pump light, thereby generating stimulated Raman amplification. The splitting coefficients (*a₁, a₂,* ..., *a_{M}, ..., k₁, k₂, ..., k_{M}*) corresponding to the N channels of pump light are adjustable (that is, the pump control module performs adjustment based on the power configuration information), to implement a power equalization between spatial wavelength channels.

The space division multiplexer in this embodiment of this application may be a mode multiplexer, a fiber core multiplexer, or a multiplexer in another dimension. This is not specifically limited.

The optical signal amplification apparatus in embodiments of this application may be applied to a plurality of types of optical communications systems, for example, a single-mode fiber transmission system, a few-mode fiber transmission system, and a multimode fiber transmission system, and is applicable to a comparatively wide range of scenarios.

In a possible implementation, the optical signal amplification apparatus in this application may be cascaded with and used in combination with a space division multiplexing EDFA. FIG. 7 is a schematic diagram of a structure of a hybrid Raman/EDFA space division multiplexing fiber amplifier according to an embodiment of this application. As shown in FIG. 7, the structure includes a power detection module, a pump control module, a Raman amplification module (which includes a space division multiplexing fiber and a space division multiplexer, and optionally, may further include a dichroic mirror), a space division multiplexing EDFA, and an optical splitting apparatus. In FIG. 7, pump light is coupled to the space division multiplexing EDFA through one dichroic mirror. A space division multiplexed optical signal amplified by the space division multiplexing EDFA is split by one optical splitting apparatus (for example, a first optical splitter), and partial light obtained through the splitting is transmitted to the power detection module. After obtaining a partial space division multiplexed optical signal from the optical splitting apparatus, the power detection module detects power (power detection information) of each wavelength channel in each spatial dimension, performs calculation on the power detection information to obtain power configuration information, and then feeds back the power configuration information to the pump control module. The pump control module adjusts splitting coefficients of pump light of different wavelengths based on the power configuration information transferred by the power detection module, and outputs N channels of pump light. The Raman amplification module performs beam combining on the N channels of pump light by using the space division multiplexer, and inputs, to the space division multiplexing fiber, pump light obtained through beam combining, to compensate for power unflatness of wavelength channels in each spatial dimension.

In a possible implementation, the optical signal amplification apparatus in this embodiment of this application may be applied to a few-mode fiber transmission system (for example, a few-mode fiber C+L-band transmission system). The optical signal amplification apparatus further includes N phase plates. The N phase plates are disposed between the pump control module and the Raman amplification module. The N phase plates are configured to load, to corresponding modes, the N channels of pump light output by the pump control module, where the N spatial dimensions include N modes. Different modes may be understood as different distributions of light energy.

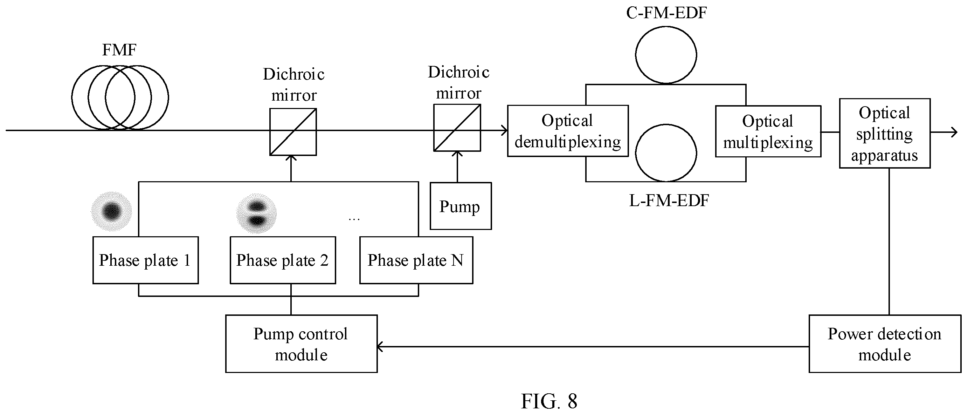

With reference to FIG. 8, the following describes an optical signal amplification apparatus applied to a few-mode fiber C+L-band transmission system. FIG. 8 is a schematic diagram of a structure of a hybrid Raman/EDFA-based C+L-band few-mode fiber amplifier. As shown in FIG. 8, the fiber amplifier includes a few-mode fiber FMF, two dichroic mirrors, a C-band and L-band few-mode fiber amplifier EDFA structure (which specifically includes a C-band few-mode erbium-doped fiber (C-FM-EDF for short) and an L-band few-mode erbium-doped fiber (L-FM-EDF for short), an optical demultiplexing apparatus, and an optical multiplexing apparatus), an optical splitting apparatus (for example, a first optical splitter), a power detection module, a pump control module, and N phase plates. The N phase plates, the few-mode fiber FMF, and the dichroic mirror may constitute a Raman amplification module. In FIG. 8, a pump light source (which may be specifically a pump laser, for example, a 980 nm pump laser) pumps a few-mode EDFA. Pump light generated by the pump light source is coupled to C-band and L-band few-mode EDFAs through the dichroic mirror. Because structures of the C-band and L-band few-mode EDFAs are different, to implement C+L-band broadband gain amplification, optical demultiplexing may be performed on signal light, and then signal light obtained through the optical demultiplexing is respectively amplified by the few-mode EDFAs of corresponding bands (namely, the C-FM-EDF and the L-FM-EDF). Through the optical multiplexing apparatus, optical multiplexing is performed on signal light amplified by the C-band and L-band few-mode EDFAs. Signal light obtained through optical multiplexing is split by the optical splitting apparatus, and partial signal light obtained through the splitting is transmitted to the power detection module. The power detection module detects a power status (or a gain status) of each wavelength channel in each mode, determines power configuration information (or gain information), and finally feeds back the configuration information to the pump control module. The pump control module performs power adjustment, that is, adjusts ratios (or splitting coefficients) of pump light at different wavelengths, based on the power configuration information sent by the power detection module. The pump control module outputs N channels of pump light. The N channels of pump light are loaded to corresponding N modes by using the N phase plates. Different phase plates correspond to different modes. It can be learned from FIG. 8 that different modes correspond to different light energy distributions (or cross-sections). Beam combining is performed on pump light in each mode, and then pump light obtained through the beam combining is injected into the few-mode fiber FMF through the dichroic mirrors, thereby pumping the FMF, to implement Raman amplification. The hybrid Raman/EDFA-based C+L-band few-mode fiber amplifier in FIG. 8 can implement Raman amplification for the C and L bands at the same time, and can compensate for gains at different channels in different FM-EDFA modes, thereby implementing mode channel equalization for the C and L bands.

It can be understood that the structure in FIG. 8 is merely an example for description, and this application is not limited thereto. For example, some components in FIG. 8 may be properly replaced with other components.

In a possible implementation, the optical signal amplification apparatus in this embodiment of this application may be applied to a multi-core fiber transmission system. The optical signal amplification apparatus further includes a multi-core fan-in module. The multi-core fan-in module is disposed between the pump control module and the Raman amplification module. The multi-core fan-in module is configured to inject, into corresponding fiber cores, the N channels of pump light output by the pump control module, where the N spatial dimensions include N fiber cores.

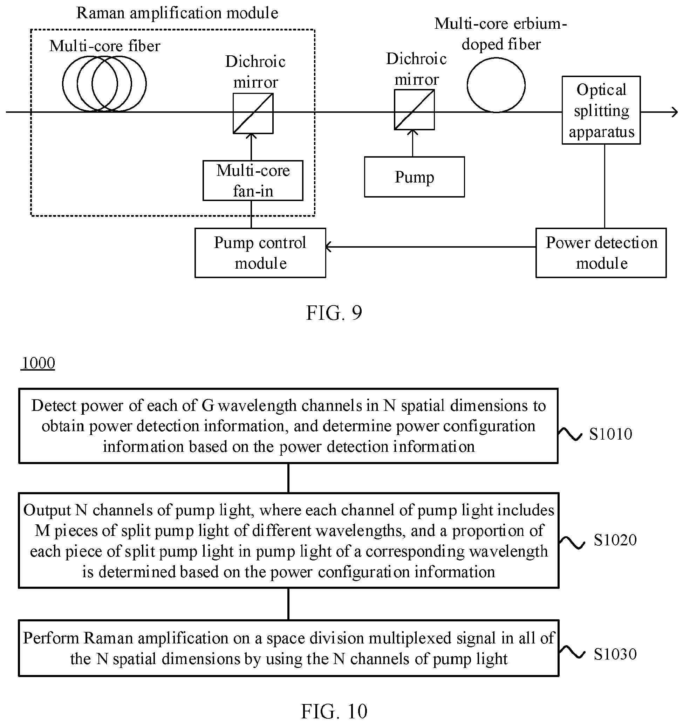

With reference to FIG. 9, the following describes an optical signal amplification apparatus applied to a multi-core fiber transmission system. FIG. 9 is a schematic diagram of a structure of an optical fiber amplifier based on a multi-core fiber transmission system. As shown in FIG. 9, the optical fiber amplifier includes a multi-core fiber, two dichroic mirrors, a pump (which may be specifically a pump laser, for example, a 980 nm pump laser), a multi-core erbium-doped fiber amplifier EDFA (which includes a multi-core erbium-doped fiber), an optical splitting apparatus, a power detection module, a pump control module, and a multi-core fan-in module. The multi-core fan-in module, the multi-core fiber, and the dichroic mirror may constitute a Raman amplification module. Pump light generated by the pump laser is used as an example. The pump light is coupled to the multi-core EDFA through one dichroic mirror. The multi-core EDFA amplifies signal light. Signal light obtained through gain amplification by the multi-core EDFA is split by one optical splitting apparatus, and partial signal light obtained through the splitting is transmitted to the power detection module. After receiving the partial signal light transmitted by the optical splitting apparatus, the power detection module detects power of each wavelength channel of each fiber core to obtain power detection information, determines power configuration information based on the power detection information, and finally feeds back the power configuration information to the pump control module. The pump control module adjusts a pump light configuration based on the power configuration information fed back by the power detection module, and outputs N channels of pump light. The Raman amplification module injects the N channels of pump light into corresponding fiber cores through the multi-core fan-in module and a dichroic mirror apparatus, to perform Raman amplification on signal light transmitted in the corresponding fiber cores. The optical fiber amplifier in FIG. 9 can implement multi-core channel equalization by compensating for gains at different channels of different fiber cores in the multi-core EDFA.

It can be understood that the structure in FIG. 9 is merely an example for description, and this application is not limited thereto. For example, some components in FIG. 9 may be properly replaced with other components.

It can be further understood that the examples in FIG. 7 to FIG. 9 in embodiments of this application are merely intended to help a person skilled in the art understand embodiments of this application, but are not intended to limit embodiments of this application to specific scenarios in the examples. Apparently, a person skilled in the art may make various equivalent modifications or changes based on the examples in FIG. 7 to FIG. 9, and such modifications or changes also fall within the scope of embodiments of this application.

Based on the foregoing optical signal amplification apparatus, this application further provides an optical signal amplification method. FIG. 10 is a schematic flowchart of an optical signal amplification method 1000 according to an embodiment of this application. The optical signal amplification method 1000 is performed by an optical signal amplification apparatus. The optical signal amplification apparatus is applied to a space division multiplexing transmission system. A to-be-detected space division multiplexed signal in the space division multiplexing transmission system includes N spatial dimensions, and each spatial dimension includes G wavelength channels, where N is a positive integer, and G is a positive integer. The method 1000 includes the following steps:

S1010: Detect power of each of the G wavelength channels in each of the N spatial dimensions to obtain power detection information, and determine power configuration information based on the power detection information.

S1020: Output N channels of pump light, where each channel of pump light includes M pieces of split pump light of different wavelengths, a proportion of each piece of split pump light in pump light of a corresponding wavelength is determined based on the power configuration information, and M is an integer greater than 1.

S1030: Perform Raman amplification on the space division multiplexed signal in all of the N spatial dimensions by using the N channels of pump light.

Optionally, the M pieces of split pump light in each channel of pump light are obtained through beam combining based on a second splitting coefficient, and each piece of split pump light is obtained by splitting pump light of a corresponding wavelength based on a first splitting coefficient. The first splitting coefficient and/or the second splitting coefficient are/is determined based on the power configuration information.

The first splitting coefficient and the second splitting coefficient depend on a specific implementation of the pump control module in the foregoing optical signal amplification apparatus. For details, refer to the foregoing descriptions of the optical signal amplification apparatus.

Optionally, the determining power configuration information based on the power detection information includes: determining the power configuration information based on the power detection information according to a power flatness criterion.

This application further provides a computer-readable storage medium, configured to store a computer program. The computer program includes instructions used to perform the foregoing optical signal amplification method.

It can be clearly understood by a person skilled in the art that, for ease and brevity of description, the steps of the foregoing described method may be performed based on corresponding modules, units, and components in the foregoing product embodiments, and details are not described herein again.

It should be understood that various numbers used in this specification are merely intended for differentiation for ease of description, but are not intended to limit the scope of this application.

It can be understood that some optional features in embodiments of this application may be independently implemented in some scenarios without relying on another feature, for example, a solution on which the optional features are currently based, to resolve a corresponding technical problem and achieve a corresponding effect, or may be combined with another feature based on a requirement in some scenarios. Correspondingly, the apparatus provided in embodiments of this application may also correspondingly implement these features or functions. Details are not described herein.

It can be further understood that names of modules in embodiments of this application are merely for ease of description and do not constitute any limitation on embodiments of this application, which is stated herein once for all. Actually, the modules in embodiments of this application may alternatively have other names.

It can be further understood that the solutions in embodiments of this application may be properly combined for use, and explanations or descriptions of terms in embodiments may be mutually referenced or explained in the embodiments. This is not limited.

It can be further understood that sequence numbers of the foregoing processes do not mean execution sequences in various embodiments of this application. The execution sequences of the processes should be determined based on functions and internal logic of the processes. Various numbers or sequence numbers in the foregoing processes are merely for differentiation for ease of description, and shall not constitute any limitation on an implementation process of embodiments of this application. A person of ordinary skill in the art may be aware that units and algorithm steps described as examples with reference to the embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person of ordinary skill in the art may be aware that units and algorithm steps described as examples with reference to the embodiments disclosed in this specification can be implemented by electronic hardware or a combination of computer software and electronic hardware. Whether the functions are performed by hardware or software depends on particular applications and design constraints of the technical solutions.

In the several embodiments provided in this application, it should be understood that the disclosed system, apparatus, and method may be implemented in other manners. For example, the described apparatus embodiment is merely an example. For example, division into the units is merely logical function division, and there may be another division manner during actual implementation. For example, a plurality of units or components may be combined or may be integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate components may be or may not be physically separate, and components displayed as units may be or may not be physical units, and may be located in one position, or may be distributed on a plurality of network units. Some or all of the units may be selected based on an actual requirement to achieve the objectives of the solutions in embodiments.

In addition, functional units in embodiments of this application may be integrated into one processing unit, or each of the units may exist alone physically, or two or more units may be integrated into one unit.

When the function is implemented in a form of a software function unit and is sold or used as an independent product, the function may be stored in a computer-readable storage medium. Based on such an understanding, the technical solutions in this application essentially, or the part contributing to a conventional technology, or a part of the technical solutions may be implemented in a form of a software product. The computer software product is stored in a storage medium, and includes several instructions for instructing a computer device (which may be a personal computer, a server, a network device, or the like) to perform all or some of the steps of the method in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

## Claims

1. An optical signal amplification apparatus, for use in a space division multiplexing transmission system, wherein a to-be-detected space division multiplexed signal in the space division multiplexing transmission system comprises N spatial dimensions, each spatial dimension comprises G wavelength channels, N is a positive integer, G is a positive integer, and
the optical signal amplification apparatus comprises a power detection module (210), a pump control module (220), and a Raman amplification module (230);
the power detection module (210) is configured to: detect power of each of the G wavelength channels in each of the N spatial dimensions to obtain power detection information; determine power configuration information based on the power detection information; and send the power configuration information to the pump control module;
the pump control module (220) is configured to output N channels of pump light, wherein each channel of pump light includes M pieces of split pump light of different wavelengths, a proportion of each piece of split pump light in pump light of a corresponding wavelength is determined based on the power configuration information, and M is an integer greater than 1; and
the Raman amplification module (230) is configured to perform Raman amplification on the space division multiplexed signal in all of the N spatial dimensions by using the N channels of pump light.

2. The optical signal amplification apparatus according to claim 1, wherein the pump control module (220) comprises M pump light sources of different wavelengths, M optical splitters, and N optical multiplexers, each optical splitter has one input port and N output ports, each pump light source is connected to an input port of one optical splitter, and N output ports of each optical splitter are connected to one output port in the N optical multiplexers;
the M pump light sources are configured to generate M pieces of pump light;
each optical splitter is configured to split pump light of a corresponding wavelength based on a first splitting coefficient, and output N pieces of split pump light through N output ports, wherein the N pieces of split pump light output by each optical splitter arrive at the N optical multiplexers, respectively;
the N optical multiplexers are configured to output the N channels of pump light, wherein each optical multiplexer is configured to perform, based on a second splitting coefficient, beam combining on M pieces of split pump light obtained from the M optical splitters, to obtain one channel of pump light; and
the first splitting coefficient and/or the second splitting coefficient are/is determined based on the power configuration information.

3. The optical signal amplification apparatus according to claim 2, wherein the M optical splitters are tunable optical splitters, and a first splitting coefficient corresponding to each tunable optical splitter is determined based on the power configuration information.

4. The optical signal amplification apparatus according to claim 2, wherein the M optical splitters are uniform optical splitters, a first splitting coefficient corresponding to each uniform optical splitter is determined by equally splitting pump light of a corresponding wavelength, and the second splitting coefficient is determined based on the power configuration information.

5. The optical signal amplification apparatus according to claim 4, wherein the N optical multiplexers implement the second splitting coefficient by using a wavelength selective switch or an optical cross-connect device.

6. The optical signal amplification apparatus according to any one of claims 1 to 5, wherein that the power detection module (210) is configured to determine power configuration information based on the power detection information comprises:
the power detection module (220) determines the power configuration information based on the power detection information according to a power flatness criterion.

7. The optical signal amplification apparatus according to any one of claims 1 to 6, wherein the power detection module (210) comprises a spatial channel separation module and a wavelength channel power detection module;
the spatial channel separation module is configured to separate the space division multiplexed signal in the N spatial dimensions; and
the wavelength channel power detection module is configured to separate the G wavelength channels in each spatial dimension, and detect the power of each wavelength channel.

8. The optical signal amplification apparatus according to any one of claims 1 to 7, wherein the optical signal amplification apparatus further comprises a first optical splitter, the first optical splitter is configured to separate the to-be-detected space division multiplexed signal from a space division multiplexing fiber link, and the first optical splitter is connected to the power detection module.

9. The optical signal amplification apparatus according to any one of claims 1 to 8, wherein the Raman amplification module (230) comprises a space division multiplexer and a space division multiplexing fiber; and
the N channels of pump light are coupled to the space division multiplexing fiber through the space division multiplexer, and the space division multiplexed signal transmitted in the space division multiplexing fiber undergoes stimulated Raman amplification under the action of the N channels of pump light.

10. The optical signal amplification apparatus according to any one of claims 1 to 9, wherein the optical signal amplification apparatus is applied to a few-mode fiber transmission system, and the optical signal amplification apparatus further comprises:
N phase plates, wherein the N phase plates are disposed between the pump control module and the Raman amplification module; and
the N phase plates are configured to load, to corresponding modes, the N channels of pump light output by the pump control module, wherein the N spatial dimensions are N modes.

11. The optical signal amplification apparatus according to any one of claims 1 to 9, wherein the optical signal amplification apparatus is applied to a multi-core fiber transmission system, and the optical signal amplification apparatus further comprises:
a multi-core fan-in module, wherein the multi-core fan-in module is disposed between the pump control module (220) and the Raman amplification module; and
the multi-core fan-in module is configured to inject, into corresponding fiber cores, the N channels of pump light output by the pump control module, wherein the N spatial dimensions are N fiber cores.

12. An optical signal amplification method, wherein the method is performed by an optical signal amplification apparatus, the optical signal amplification apparatus is used in a space division multiplexing transmission system, a to-be-detected space division multiplexed signal in the space division multiplexing transmission system comprises N spatial dimensions, each spatial dimension comprises G wavelength channels, and the method comprises:
detecting (S1010) power of each of the G wavelength channels in each of the N spatial dimensions to obtain power detection information, and determining power configuration information based on the power detection information;
outputting (S1020) N channels of pump light, wherein each channel of pump light includes M pieces of split pump light of different wavelengths, and a proportion of each piece of split pump light in pump light of a corresponding wavelength is determined based on the power configuration information; and
performing (S1030) Raman amplification on the space division multiplexed signal in all of the N spatial dimensions by using the N channels of pump light.

13. The optical signal amplification method according to claim 12, wherein the M pieces of split pump light in each channel of pump light are obtained through beam combining based on a second splitting coefficient, and each piece of split pump light is obtained by splitting pump light of a corresponding wavelength based on a first splitting coefficient; and
the first splitting coefficient and/or the second splitting coefficient are/is determined based on the power configuration information.

14. The optical signal amplification method according to claim 12 or 13, wherein the determining power configuration information based on the power detection information comprises:
determining the power configuration information based on the power detection information according to a power flatness criterion.

## Patentansprüche

1. Einrichtung zur Verstärkung optischer Signale zur Verwendung in einem Raummultiplex-Übertragungssystem, wobei ein zu erfassendes raumgemultiplextes Signal in dem Raummultiplex-Übertragungssystem N räumliche Dimensionen umfasst, jede räumliche Dimension G Wellenlängenkanäle umfasst, N eine positive Ganzzahl ist, G eine positive Ganzzahl ist, und
die Einrichtung zur Verstärkung optischer Signale ein Leistungserfassungsmodul (210), ein Pumpsteuermodul (220) und ein Raman-Verstärkungsmodul (230) umfasst;
das Leistungserfassungsmodul (210) konfiguriert ist, um: die Leistung jedes der G Wellenlängenkanäle in jeder der N räumlichen Dimensionen zu erfassen, um Leistungserfassungsinformationen zu erhalten; auf Basis der Leistungserfassungsinformationen Leistungskonfigurationsinformationen zu bestimmen; und die Leistungskonfigurationsinformationen an das Pumpsteuermodul zu senden;
das Pumpsteuermodul (220) konfiguriert ist, um N Kanäle von Pumplicht auszugeben, wobei jeder Kanal von Pumplicht M Teile von aufgeteiltem Pumplicht unterschiedlicher Wellenlängen beinhaltet, ein Anteil jedes Teils von aufgeteiltem Pumplicht in Pumplicht einer entsprechenden Wellenlänge auf Basis der Leistungskonfigurationsinformationen bestimmt wird, und M eine Ganzzahl größer als 1 ist; und
das Raman-Verstärkungsmodul (230) konfiguriert ist, um unter Verwendung der N Kanäle von Pumplicht eine Raman-Verstärkung an dem raumgemultiplexten Signal in allen der N räumlichen Dimensionen durchzuführen.

2. Einrichtung zur Verstärkung optischer Signale nach Anspruch 1, wobei das Pumpsteuermodul (220) M Pumplichtquellen unterschiedlicher Wellenlängen, M optische Teiler und N optische Multiplexer umfasst, jeder optische Teiler einen Eingangsanschluss und N Ausgangsanschlüsse aufweist, jede Pumplichtquelle mit einem Eingangsanschluss eines optischen Teilers verbunden ist, und N Ausgangsanschlüsse jedes optischen Teilers mit einem Ausgangsanschluss in den N optischen Multiplexern verbunden sind;
die M Pumplichtquellen konfiguriert sind, um M Teile von Pumplicht zu erzeugen;
jeder optische Teiler konfiguriert ist, um Pumplicht einer entsprechenden Wellenlänge auf Basis eines ersten Teilungskoeffizienten aufzuteilen, und N Teile von aufgeteiltem Pumplicht durch N Ausgangsanschlüsse auszugeben, wobei die N Teile von aufgeteiltem Pumplicht, die von jedem optischen Teiler ausgegeben werden, jeweils an den N optischen Multiplexern ankommen;
die N optischen Multiplexer konfiguriert sind, um die N Kanäle von Pumplicht auszugeben, wobei jeder optische Multiplexer konfiguriert ist, um auf Basis eines zweiten Teilungskoeffizienten eine Strahlkombination an M Teilen von aufgeteiltem Pumplicht durchzuführen, die von den M optischen Teilern erhalten werden, um einen Kanal von Pumplicht zu erhalten; und
der erste Teilungskoeffizient und/oder der zweite Teilungskoeffizient auf Basis der Leistungskonfigurationsinformationen bestimmt werden/wird.

3. Einrichtung zur Verstärkung optischer Signale nach Anspruch 2, wobei die M optischen Teiler abstimmbare optische Teiler sind, und ein erster Teilungskoeffizient, der jedem abstimmbaren optischen Teiler entspricht, auf Basis der Leistungskonfigurationsinformationen bestimmt wird.

4. Einrichtung zur Verstärkung optischer Signale nach Anspruch 2, wobei die M optischen Teiler gleichmäßige optische Teiler sind, ein erster Teilungskoeffizient, der jedem gleichmäßigen optischen Teiler entspricht, durch gleichmäßiges Aufteilen von Pumplicht einer entsprechenden Wellenlänge bestimmt wird, und der zweite Teilungskoeffizient auf Basis der Leistungskonfigurationsinformationen bestimmt wird.

5. Einrichtung zur Verstärkung optischer Signale nach Anspruch 4, wobei die N optischen Multiplexer den zweiten Teilungskoeffizienten unter Verwendung eines wellenlängenselektiven Schalters oder einer optischen Cross-Connect-Vorrichtung implementieren.

6. Einrichtung zur Verstärkung optischer Signale nach einem der Ansprüche 1 bis 5, wobei dass das Leistungserfassungsmodul (210) konfiguriert ist, um auf Basis der Leistungserfassungsinformationen Leistungskonfigurationsinformationen zu bestimmen, Folgendes umfasst:
das Leistungserfassungsmodul (220) die Leistungskonfigurationsinformationen auf Basis der Leistungserfassungsinformationen nach einem Leistungsflachheitskriterium bestimmt.

7. Einrichtung zur Verstärkung optischer Signale nach einem der Ansprüche 1 bis 6, wobei das Leistungserfassungsmodul (210) ein Raumkanal-Trennungsmodul und ein Wellenlängenkanal-Leistungserfassungsmodul umfasst;
das Raumkanal-Trennungsmodul konfiguriert ist, um das raumgemultiplexte Signal in den N räumlichen Dimensionen zu trennen; und
das Wellenlängenkanal-Leistungserfassungsmodul konfiguriert ist, um die G Wellenlängenkanäle in jeder räumlichen Dimension zu trennen, und die Leistung jedes Wellenlängenkanals zu erfassen.

8. Einrichtung zur Verstärkung optischer Signale nach einem der Ansprüche 1 bis 7, wobei die Einrichtung zur Verstärkung optischer Signale ferner einen ersten optischen Teiler umfasst, der erste optische Teiler konfiguriert ist, um das zu erfassende raumgemultiplexte Signal von einer Raummultiplex-Faserverbindung zu trennen, und der erste optische Teiler mit dem Leistungserfassungsmodul verbunden ist.

9. Einrichtung zur Verstärkung optischer Signale nach einem der Ansprüche 1 bis 8, wobei das Raman-Verstärkungsmodul (230) einen Raummultiplexer und eine Raummultiplex-Faser umfasst; und
die N Kanäle von Pumplicht durch den Raummultiplexer in die Raummultiplex-Faser eingekoppelt werden, und das raumgemultiplexte Signal, das in der Raummultiplex-Faser übertragen wird, einer stimulierten Raman-Verstärkung unter der Wirkung der N Kanäle von Pumplicht unterzogen wird.

10. Einrichtung zur Verstärkung optischer Signale nach einem der Ansprüche 1 bis 9, wobei die Einrichtung zur Verstärkung optischer Signale auf ein Wenigmodenfaser-Übertragungssystem angewendet wird, und die Einrichtung zur Verstärkung optischer Signale ferner Folgendes umfasst:
N Phasenplatten, wobei die N Phasenplatten zwischen dem Pumpsteuermodul und dem Raman-Verstärkungsmodul angeordnet sind; und
die N Phasenplatten konfiguriert sind, um die N Kanäle von Pumplicht, die von dem Pumpsteuermodul ausgegeben werden, auf entsprechende Modi zu laden, wobei die N räumlichen Dimensionen N Modi sind.

11. Einrichtung zur Verstärkung optischer Signale nach einem der Ansprüche 1 bis 9, wobei die Einrichtung zur Verstärkung optischer Signale auf ein Mehrkernfaser-Übertragungssystem angewendet wird, und die Einrichtung zur Verstärkung optischer Signale ferner umfasst:
ein Mehrkern-Fan-in-Modul, wobei das Mehrkern-Fan-in-Modul zwischen dem Pumpsteuermodul (220) und dem Raman-Verstärkungsmodul angeordnet ist; und
das Mehrkern-Fan-in-Modul konfiguriert ist, um die N Kanäle von Pumplicht, die von dem Pumpsteuermodul ausgegeben werden, in entsprechende Faserkerne zu injizieren, wobei die N räumlichen Dimensionen N Faserkerne sind.

12. Verfahren zur Verstärkung optischer Signale, wobei das Verfahren durch eine Einrichtung zur Verstärkung optischer Signale durchgeführt wird, die Einrichtung zur Verstärkung optischer Signale in einem Raummultiplex-Übertragungssystem verwendet wird, ein zu erfassendes raumgemultiplextes Signal in dem Raummultiplex-Übertragungssystem N räumliche Dimensionen umfasst, jede räumliche Dimension G Wellenlängenkanäle umfasst, und das Verfahren Folgendes umfasst:
Erfassen (S1010) der Leistung jedes der G Wellenlängenkanäle in jeder der N räumlichen Dimensionen, um Leistungserfassungsinformationen zu erhalten, und Bestimmen von Leistungskonfigurationsinformationen auf Basis der Leistungserfassungsinformationen;
Ausgeben (S1020) von N Kanälen von Pumplicht, wobei jeder Kanal von Pumplicht M Teile von aufgeteiltem Pumplicht unterschiedlicher Wellenlängen beinhaltet, und ein Anteil jedes Teils von aufgeteiltem Pumplicht in Pumplicht einer entsprechenden Wellenlänge auf Basis der Leistungskonfigurationsinformationen bestimmt wird; und
Durchführen (S1030) einer Raman-Verstärkung an dem raumgemultiplexten Signal in allen der N räumlichen Dimensionen unter Verwendung der N Kanäle von Pumplicht.

13. Verfahren zur Verstärkung optischer Signale nach Anspruch 12, wobei die M Teile von aufgeteiltem Pumplicht in jedem Kanal von Pumplicht durch Strahlkombination auf Basis eines zweiten Teilungskoeffizienten erhalten werden, und jeder Teil von aufgeteiltem Pumplicht durch Aufteilen von Pumplicht einer entsprechenden Wellenlänge auf Basis eines ersten Teilungskoeffizienten erhalten wird; und
der erste Teilungskoeffizient und/oder der zweite Teilungskoeffizient auf Basis der Leistungskonfigurationsinformationen bestimmt werden/wird.

14. Verfahren zur Verstärkung optischer Signale nach Anspruch 12 oder 13, wobei das Bestimmen von Leistungskonfigurationsinformationen auf Basis der Leistungserfassungsinformationen Folgendes umfasst:
Bestimmen der Leistungskonfigurationsinformationen auf Basis der Leistungserfassungsinformationen nach einem Leistungsflachheitskriterium.

## Revendications

1. Appareil d'amplification de signal optique, destiné à être utilisé dans un système de transmission à multiplexage par répartition spatiale, dans lequel un signal multiplexé par répartition spatiale à détecter dans le système de transmission à multiplexage par répartition spatiale comprend N dimensions spatiales, chaque dimension spatiale comprend G canaux de longueur d'onde, N est un entier positif, G est un entier positif, et
l'appareil d'amplification de signal optique comprend un module de détection de puissance (210), un module de commande de pompe (220) et un module d'amplification Raman (230) ;
le module de détection de puissance (210) est configuré pour :
détecter la puissance de chacun des G canaux de longueur d'onde dans chacune des N dimensions spatiales afin d'obtenir des informations de détection de puissance ; déterminer des informations de configuration de puissance sur la base des informations de détection de puissance ; et envoyer les informations de configuration de puissance au module de commande de pompe ;
le module de commande de pompe (220) est configuré pour produire N canaux de lumière de pompe, dans lequel chaque canal de lumière de pompe comporte M éléments de lumière de pompe divisée de différentes longueurs d'onde, une proportion de chaque segment de lumière de pompe divisée dans la lumière de pompe d'une longueur d'onde correspondante est déterminée sur la base des informations de configuration de puissance, et M est un entier supérieur à 1 ; et
le module d'amplification Raman (230) est configuré pour réaliser une amplification Raman sur le signal multiplexé par répartition spatiale dans toutes les N dimensions spatiales à l'aide des N canaux de lumière de pompe.

2. Appareil d'amplification de signal optique selon la revendication 1, dans lequel le module de commande de pompe (220) comprend M sources de lumière de pompe de différentes longueurs d'onde, M séparateurs optiques et N multiplexeurs optiques, chaque séparateur optique possède un port d'entrée et N ports de sortie, chaque source de lumière de pompe est reliée à un port d'entrée d'un séparateur optique, et N ports de sortie de chaque séparateur optique sont reliés à un port de sortie des N multiplexeurs optiques ;
les M sources lumineuses de pompe sont configurées pour générer M éléments de lumière de pompe ;
chaque séparateur optique est configuré pour diviser la lumière de pompe d'une longueur d'onde correspondante sur la base d'un premier coefficient de division, et produire N éléments de lumière de pompe divisée à travers N ports de sortie, dans lequel les N éléments de lumière de pompe divisée produits par chaque séparateur optique arrivent respectivement aux N multiplexeurs optiques ;
les N multiplexeurs optiques sont configurés pour produire les N canaux de lumière de pompe, dans lequel chaque multiplexeur optique est configuré pour réaliser, sur la base d'un second coefficient de division, une combinaison de faisceaux sur M éléments de lumière de pompe obtenus à partir des M séparateurs optiques, afin d'obtenir un canal de lumière de pompe ; et
le premier coefficient de division et/ou le second coefficient de division sont/est déterminé(s) sur la base des informations de configuration de puissance.

3. Appareil d'amplification de signal optique selon la revendication 2, dans lequel les M séparateurs optiques sont des séparateurs optiques accordables, et un premier coefficient de séparation correspondant à chaque séparateur optique accordable est déterminé sur la base des informations de configuration de puissance.

4. Appareil d'amplification de signal optique selon la revendication 2, dans lequel les M séparateurs optiques sont des séparateurs optiques uniformes, un premier coefficient de séparation correspondant à chaque séparateur optique uniforme est déterminé en divisant de manière égale la lumière de pompe d'une longueur d'onde correspondante, et le second coefficient de séparation est déterminé sur la base des informations de configuration de puissance.

5. Appareil d'amplification de signal optique selon la revendication 4, dans lequel les N multiplexeurs optiques mettent en œuvre le second coefficient de division à l'aide d'un commutateur sélectif de longueur d'onde ou d'un dispositif de connexion croisée optique.

6. Appareil d'amplification de signal optique selon l'une quelconque des revendications 1 à 5, dans lequel le fait que le module de détection de puissance (210) est configuré pour déterminer les informations de configuration de puissance sur la base des informations de détection de puissance comprend :
le module de détection de puissance (220) détermine les informations de configuration de puissance sur la base des informations de détection de puissance selon un critère de planéité de puissance.

7. Appareil d'amplification de signal optique selon l'une quelconque des revendications 1 à 6, dans lequel le module de détection de puissance (210) comprend un module de séparation de canal spatial et un module de détection de puissance de canal de longueur d'onde ;
le module de séparation de canal spatial est configuré pour séparer le signal multiplexé par répartition spatiale dans les N dimensions spatiales ; et
le module de détection de puissance du canal de longueur d'onde est configuré pour séparer les G canaux de longueur d'onde dans chaque dimension spatiale et détecter la puissance de chaque canal de longueur d'onde.

8. Appareil d'amplification de signal optique selon l'une quelconque des revendications 1 à 7, dans lequel l'appareil d'amplification de signal optique comprend en outre un premier séparateur optique, le premier séparateur optique est configuré pour séparer le signal multiplexé par répartition spatiale à détecter d'une liaison par fibre optique à multiplexage par répartition spatiale, et le premier séparateur optique est relié au module de détection de puissance.

9. Appareil d'amplification de signal optique selon l'une quelconque des revendications 1 à 8, dans lequel le module d'amplification Raman (230) comprend un multiplexeur par répartition spatiale et une fibre à multiplexage par répartition spatiale ; et
les N canaux de lumière de pompe sont couplés à la fibre à multiplexage par répartition spatiale par l'intermédiaire du multiplexeur spatial, et le signal multiplexé par répartition spatiale transmis dans la fibre à multiplexage par répartition spatiale subit une amplification Raman stimulée sous l'action des N canaux de lumière de pompe.

10. Appareil d'amplification de signal optique selon l'une quelconque des revendications 1 à 9, dans lequel l'appareil d'amplification de signal optique est appliqué à un système de transmission par fibre à quelques modes, et l'appareil d'amplification de signal optique comprend en outre :
N plaques de phase, dans lequel les N plaques de phase sont disposées entre le module de commande de pompe et le module d'amplification Raman ; et
les N plaques de phase sont configurées pour charger, selon des modes correspondants, les N canaux de sortie de lumière de pompe par le module de commande de pompe, dans lequel les N dimensions spatiales sont N modes.

11. Appareil d'amplification de signal optique selon l'une quelconque des revendications 1 à 9, dans lequel l'appareil d'amplification de signal optique est appliqué à un système de transmission par fibre multicœur, et l'appareil d'amplification de signal optique comprend en outre :
un module d'entrance multicœur, dans lequel le module d'entrance multicœur est disposé entre le module de commande de pompe (220) et le module d'amplification Raman ; et
le module d'entrance multicœur est configuré pour injecter, dans les cœurs de fibre correspondants, les N canaux de sortie de lumière de pompe par le module de commande de pompe, dans lequel les N dimensions spatiales sont N cœurs de fibre.

12. Procédé d'amplification de signal optique, dans lequel le procédé est réalisé par un appareil d'amplification de signal optique, l'appareil d'amplification de signal optique est utilisé dans un système de transmission à multiplexage par répartition spatiale, un signal multiplexé par répartition spatiale à détecter dans le système de transmission à multiplexage par répartition spatiale comprend N dimensions spatiales, chaque dimension spatiale comprend G canaux de longueur d'onde, et le procédé comprend :
la détection (S1010) de la puissance de chacun des G canaux de longueur d'onde dans chacune des N dimensions spatiales afin d'obtenir des informations de détection de puissance, et la détermination des informations de configuration de puissance sur la base des informations de détection de puissance ;
la production (S1020) de N canaux de lumière de pompe, dans lequel chaque canal de lumière de pompe comporte M éléments de lumière de pompe divisée de différentes longueurs d'onde, et une proportion de chaque élément de lumière de pompe divisée dans la lumière de pompe d'une longueur d'onde correspondante est déterminée sur la base des informations de configuration de puissance ; et
la réalisation (S1030) d'une amplification Raman sur le signal multiplexé par répartition spatiale dans toutes les N dimensions spatiales à l'aide des N canaux de lumière de pompe.

13. Procédé d'amplification de signal optique selon la revendication 12, dans lequel les M éléments de lumière de pompe divisée dans chaque canal de lumière de pompe sont obtenus par l'intermédiaire d'une combinaison de faisceaux sur la base d'un second coefficient de division, et chaque élément de lumière de pompe divisée est obtenu en divisant la lumière de pompe d'une longueur d'onde correspondante sur la base d'un premier coefficient de division ; et
le premier coefficient de division et/ou le second coefficient de division sont/est déterminé(s) sur la base des informations de configuration de puissance.

14. Procédé d'amplification de signal optique selon la revendication 12 ou 13, dans lequel la détermination des informations de configuration de puissance sur la base des informations de détection de puissance comprend :
la détermination des informations de configuration de puissance sur la base des informations de détection de puissance selon un critère de planéité de puissance.
